# EUROPEAN PATENT SPECIFICATION

(11) **EP 2 927 479 B1**
(45) Date of publication and mention of the grant of the patent: **21.11.2018**
(21) Application number: 14382124.7
(22) Date of filing: 31.03.2014
(51) Int. Cl.: F03D 1/06, F03D 13/10

(54) **Wind turbine rotor rotation**
Windturbinenrotordrehung
Rotation du rotor d'éolienne

(43) Date of publication of application: 07.10.2015
(73) Proprietor: Alstom Renovables España, S.L., 08005 Barcelona (ES)
(72) Inventor: CORTADA ACOSTA, Pere, 08195 SANT CUGAT DEL VALLÈS (ES)
(74) Representative: ZBM Patents - Zea, Barlocci & Markvardsen

(56) References cited:
- EP-A1- 2 573 384
- EP-A1- 2 574 774
- WO-A1-2013/045076
- CN-A- 102 367 783
- DE-A1-102008 044 900
- US-A1- 2011 260 461

## Description

The present disclosure relates to devices and methods for mounting blades in a hub of a wind turbine.

### BACKGROUND

In general, for erecting a wind turbine the tower is constructed first and the nacelle of the wind turbine is then hoisted and mounted on top of the tower together with the generator, the gearbox and other wind turbine components fitted therein.

The hub may be hoisted with the complete set of blades (typically three) already mounted. However, this has the disadvantage that a large surface area is required, which may not be available such as in the case of offshore wind turbines.

It is also known to hoist an incomplete rotor assembly, e.g. the hub with two blades, to the nacelle and subsequently hoist the remaining blade for mounting it to the hub. In these cases, the rotor hub with the two blades is normally mounted with the two blades pointing upwards, i.e. in a "bunny ears" configuration. There is thus no need for rotating the wind turbine rotor as the third blade could be vertically mounted from below.

However, in order to be able to perform these rather complicated installation steps, the prevailing wind speed has to be below a predetermined value. The period of time depends on the expected length of the installation step and a safety factor to be taken into account. This mounting method involving hoisting the incomplete rotor assembly is complex due to the size and weight of the parts that have to be hoisted.

For this reason, it is preferred to hoist the hub first and then hoist the blades one at a time and mounting them to the hub of the wind turbine. In this case, the blades may be mounted to the hub in a variety of ways. For example, the blades may be mounted in a substantially vertical manner or substantially horizontally or even at inclined angles. This has the advantage that it involves individual installation steps which require less time and may be performed at higher winds, thus increasing the time windows available for installation. However, such methods require rotation of the hub between the mounting of one blade and another. In order to correctly position the hub, torque is required for rotating the wind turbine rotor after mounting one blade in order to mount the next blade. When not all blades have been mounted onto the hub, the hub is not balanced, so that the weight of one or more blades has to be carried upwards when rotating the hub. The corresponding torque may thus be very high.

Torque required for rotating the wind turbine rotor may be delivered using the gearbox, when present, with an external power supply. Actuation of the gearbox for rotating the rotor may be used in combination with a locking means. The locking means can be actuated for maintaining the rotor locked in a desired angular position for mounting a blade to the hub and can be actuated to unlock the rotor for rotating the hub and positioning it for mounting another blade.

In direct-drive wind turbines the rotation of the hub is extremely difficult, especially in offshore wind turbine generators, as no gearbox is provided between the rotor and the generator of the wind turbine. Even though the generator may be suitable for operating as a motor, it will generally not be able to deliver the required torque during installation before all the blades are arranged at the hub due to the large moments induced by the size of the blades. This results in too heavy loads acting on the rotor which makes properly positioning of the hub for mounting the blades very difficult.

Therefore, especially dedicated blade mounting devices are required for mounting of the blades.

US8646177 discloses a wind turbine blade mounting device comprising a securing device for releasably securing the hub and preventing it from being rotated. It also comprises a stator drive device that is operably connected to the stator such that rotation of the stator in a first direction causes the hub to rotate in the first direction. The stator drive device may include a screw connecting a torque arm attached to the wind turbine stator with an actuator such as a piston. The actuator causes the screw to be rotated for displacing the torque arm.

While this device for rotating the stator facilitates the hub positioning operation for mounting of the blade, there is the disadvantage that it still requires a securing device for preventing the hub from being rotated relative to the stator during the blade mounting process. This adds complexity and involves additional costs to the blade mounting device.

US2011260461 discloses a device for turning the rotor in a wind turbine generator, which wind turbine generator is of the type comprising a drive train including a main shaft connected to a rotor hub, a gear box connected to the main shaft and a coupling for coupling the gear box to the generator. Such device comprises first and second members attached to a coupling hub. The second members mesh with a chain that is driven by a motor and speed reducer assembly through a sprocket. Actuation of the motor causes the rotation axis of the wind turbine generator to be rotated for assembling and disassembling the blades.

EP 2 573 384 A discloses a device according to the preamble of claim 1.

### SUMMARY

A device is disclosed for assembling a rotor assembly of a wind turbine by means of which the above problem is solved and which provides additional advantages as it will be described below.

A rotor assembly as used herein comprises the wind turbine hub and a number of blades, typically three, positioned at 120° relative to each other.

The present device is suitable for mounting the blades in the wind turbine hub and it is particularly intended for direct-drive wind turbines although other types of wind turbines are not ruled out. The present device is especially advantageous in offshore wind turbines. However, the present device is not limited to such applications.

Specifically, the present device comprises driving means to rotate the hub relative to a stationary part of the wind turbine. As used herein, a stationary part of the wind turbine refers to any part of the wind turbine that is fixed relative to the horizontal axis of the rotor. The driving means of the present device are configured to rotate the hub relative to the stationary part in order to arrange the hub in one determined angular position suitable for mounting the blade. This angular position suitable for mounting the blade is a position such that blade, once it has been hoisted, is aligned with a blade mounting location of the hub suitable for mounting the blade therein.

The driving means comprises a driving element and a driven element. The driving element is associated with one of the hub and the stationary part. The driven element is associated with the other of the hub and the stationary part. The fact that the driving element and the driven element are associated with element and the driven element may be part of the hub, or that may be fitted, arranged, provided in or mounted to the hub and the stationary part of the wind turbine. Generally, if the driving element or the driven element is associated, for example, with the rotor hub this should be interpreted that the driving element or the driven element is moved with the rotor hub.

The driven element is coupled with the driving element such that the driven element is rotated by the driving element. Rotation of the driving element causes the hub to be rotated for positioning the hub in the above mentioned angular position suitable for mounting the blade to the hub.

It is preferred that the blades of the rotor hub are mounted in a horizontal position. This permits a much larger number of installation windows resulting from weather conditions than other blade installation methods. Horizontal mounting of the blades is facilitated by the use of the present device as it allows a precise positioning of the hub.

Coupling between the driving element and the driven element may be carried out either directly (single-stage) or indirectly (multi-stage) if required. Indirect coupling between the driving element and the driven element may be carried out by providing one or more additional pinion gears between the driving element and the driven element. This may be required for providing a different gear ratio or due to space constraints.

The driving element and the driven element are arranged such that their corresponding axes of rotation are at least substantially perpendicular to each other. In addition, the driving element is arranged such that it is capable of driving the driven element continuously with no end of stroke stops.

In one example, the driving element may comprise a threaded shaft, that is, a shaft with screw-like threads, and the driven element may comprise a gearwheel. The threaded shaft meshes with the gearwheel, with both the threaded shaft and the gearwheel being arranged such that their axes of rotation are substantially perpendicular to each other, as stated above. In this case, the threaded shaft is arranged such that it is capable of driving the gearwheel continuously with no end of stroke stops, as stated above.

The above driving means, particularly the example comprising a threaded shaft meshing with a gearwheel for driving the hub, provide high torque and high gear reduction (large transmission ratio). This has the advantage that the hub can be accurately positioned for mounting the blades. In addition, this has the important advantage that the driving means are mechanically irreversible, that is, the driving means have a self-locking capability. Irreversibility is due to large reduction ratio and great friction features between the driving element and the driven element. In the above example, the threaded shaft can rotate the gearwheel but the gearwheel can not rotate the threaded shaft. The direction of transmission is thus not reversible. This results in that the driving means are self-locking so that the use of additional locking devices to lock the rotor during blade mounting processes is avoided.

Actuating means may be provided for driving the driving element. The actuating means may be for example an electric or a hydraulic motor. Other actuating means are not ruled out.

Several appropriate positions are possible for mounting the device in a wind turbine. In general, the device is to be mounted between a stationary part and a rotary part of the wind turbine. In a first example, the device may be arranged between the hub and the frame of the wind turbine and more specifically between the rear of the hub and the frame of the wind turbine. In a second example, the blade mounting device may be arranged between the front of the hub and the front of the frame of the wind turbine. Still in a third example, the blade mounting device may be arranged integrated in the generator, that is, arranged between the generator stator and the generator rotor. In this third example, the driven element may be attached to the generator stator, whereas the driving element is attached to the generator rotor. Generators used in direct drive wind turbines are usually of large diameter and, consequently, the installation of the blade mounting device in said large structure is feasible.

When a complete set of blades has been mounted in the hub so there is no need to rotate the hub relative to the stationary part anymore, the present blade mounting device may be removed from the wind turbine. However, in some cases the blade mounting device may be left in the wind turbine. For this purpose, the device may be provided with means suitable for disengaging the driving element from the driven element when the hub is not required to be rotated relative to the stationary part anymore.

For mounting the blades in a hub of a wind turbine by means of the present blade mounting device, the device is first mounted in the wind turbine, for example between the hub and the frame or integrated in the generator as explained above. The blade mounting device is actuated such that the hub is caused to rotate until a position suitable for mounting the blade to the hub has been reached. Then, a blade is hoisted to the hub and held in a horizontal position and aligned with a blade receiving portion of the hub. The blade is then mounted to the hub. Once the blade has been mounted to the hub, the blade mounting device is actuated again for further rotating the hub to a different angular position suitable for mounting an additional blade to the hub. The additional blade is then hoisted and mounted to the hub. When the complete set of blades has been mounted to the hub so there is no need to rotate the hub relative to the stationary part anymore by the present blade mounting device, the device may be removed from the wind turbine. As stated above, the device can be left in the wind turbine if the device is provided with means for disengaging the driving element from the driven element.

An accurate, simple and cost effective device for assembling a wind turbine rotor is provided by means of which the blades can be efficiently mounted in the wind turbine hub, with the advantage of not requiring additional devices for locking the rotor due to the self-locking capability of the driving means in the blade mounting device.

### BRIEF DESCRIPTION OF THE DRAWINGS

Non-limiting examples of the present disclosure will be described in the following, with reference to the appended drawings, in which:
Figure 1 is a diagrammatic elevational view of one example of the blade mounting device;
Figure 1a is a diagrammatic elevational view of a further example where a number of blade mounting devices are provided in the wind turbine which driving means comprise indirect or multi-stage type gearing; driving means comprise indirect or multi-stage type gearing;
Figures 2-4 are sectional views of part of a wind turbine showing different examples of the placement of the present blade mounting device; and
Figure 5 is a sectional view of one example with an alternative wind turbine layout.

### DETAILED DESCRIPTION OF EXAMPLES

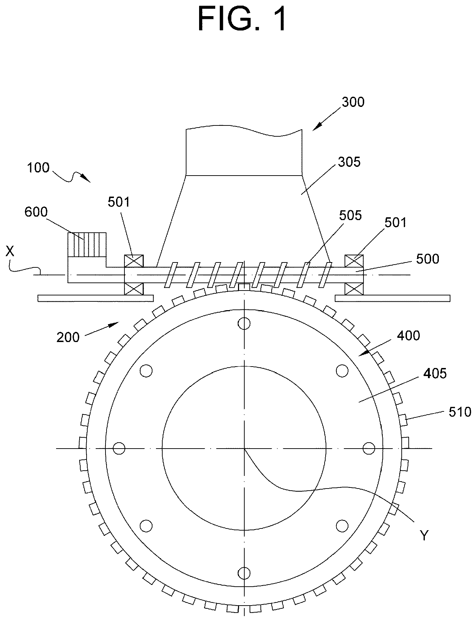

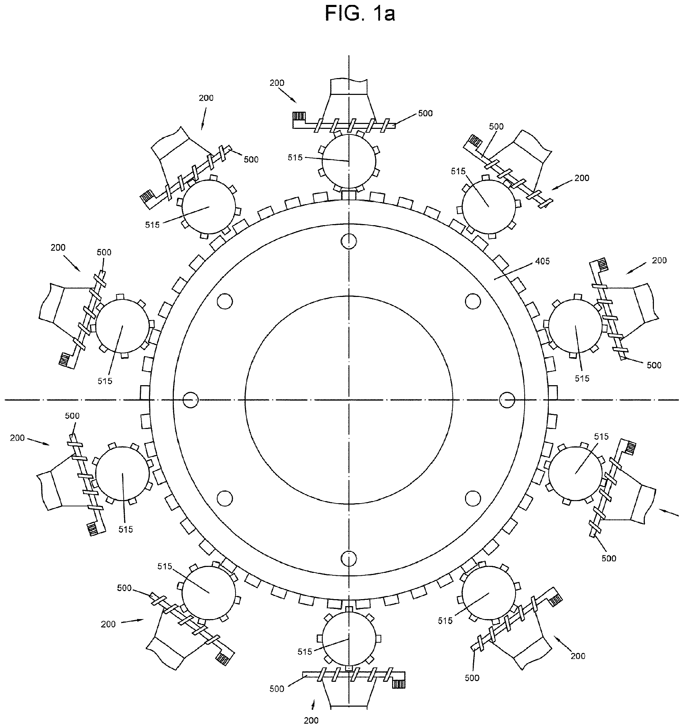

In the particular example shown in figure 1, the blade mounting device 100 comprises driving means 200 to rotate the hub 300 of the wind turbine 10. The driving means 200 are associated with the hub 300 in the example of figure 1 through a rotor arm coupling 305.

The driving means 200 are intended to rotate the hub 300 relative to a stationary part 400 of the wind turbine. In the example shown in figure 1, the stationary part 400 of the wind turbine is the front frame 405 of the wind turbine. In general, the stationary part 400 may be any part of the wind turbine that is fixed relative to the horizontal axis of the rotor assembly. The rotor assembly comprises the hub 300 and a number of blades (not shown in the figures), such as three blades positioned at 120° relative to each other.

In order to rotate the hub 300 relative to the stationary part 400 for arranging the hub 300 in a position suitable for mounting a blade, the driving means 200 include a driving element meshing with a driven element.

The driving element in the example shown consists of a threaded shaft 500 that is rotatably attached to the hub 300. Attachment of the threaded shaft 500 to the hub 300 is carried out through the arm coupling 305. The threaded shaft 500 is rotatably attached to the hub 300 by means of a bearing assembly 501.

The driven element in the example shown consists of a gearwheel 510 that is attached to the front frame 405 of the wind turbine. As shown in figure 1, the threaded shaft 500 has its teeth 505 meshing with those of the gearwheel 510 with the axis of rotation X of the threaded shaft 500 arranged perpendicular to the axis of rotation Y of the gearwheel ***510*.**

By the above arrangement, the threaded shaft 500 is capable of rotating continuously with respect to the gearwheel 510. Rotation of the threaded shaft 500 meshing with the gearwheel 510 causes the hub 300 to be accurately rotated until it is positioned in a given angular position suitable for mounting the blade. The blade has been previously hoisted to the hub 300 and held in a horizontal position.

Due to the large reduction ratio between the threaded shaft 500 and the gearwheel 510 the driving means 200 are suitable for accurately positioning of the hub 300 for mounting the blades. In addition, such reduction ratio between the threaded shaft 500 and the gearwheel 510 causes the driving means 200 to be self-locking as the threaded shaft 500 is prevented from being rotated by the gearwheel 510. The use of additional locking devices to lock the rotor when mounting the blade is thus avoided.

As shown in figure 1, the blade mounting device 100 further includes actuating means 600, such as for example an electric or an hydraulic motor, for driving the threaded shaft 500.

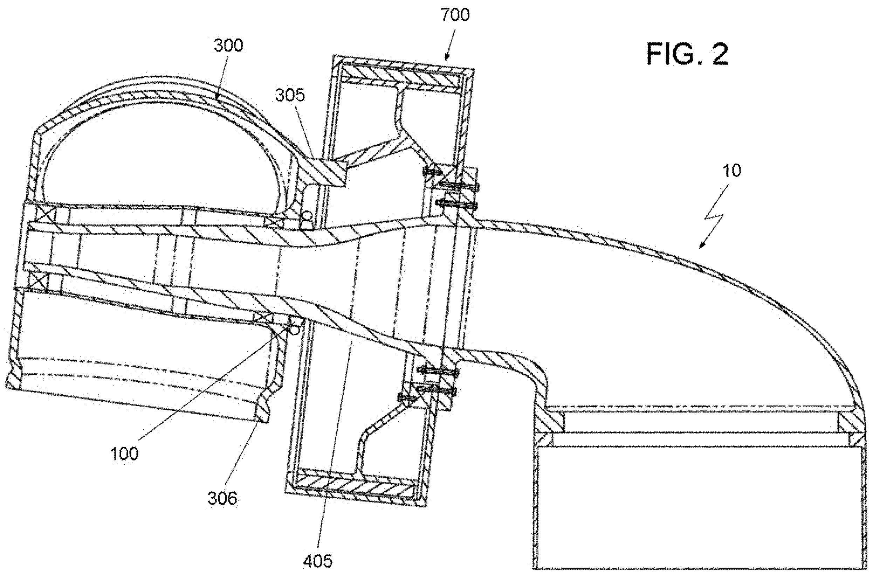

Figures 2-4 show different locations where the blade mounting device 100 can be mounted to the wind turbine 10.

In general, the blade mounting device 100 is to be mounted between a stationary part and a rotary part of the wind turbine 10 such that in use the hub 300 is rotated relative to the stationary part of the wind turbine 10.

In the example shown in figure 2, the blade mounting device 100 is arranged between the rear 306 of the hub 300 and the frame 405 of the wind turbine 10.

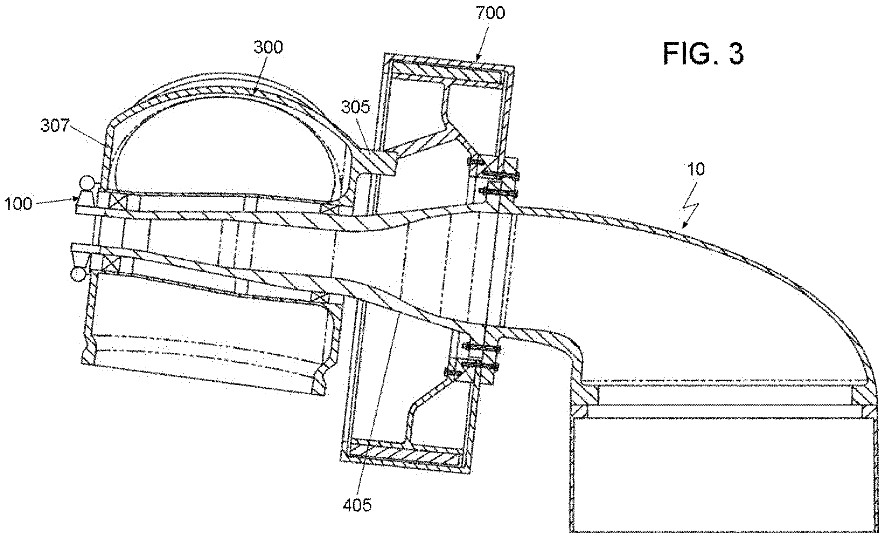

In the example shown in figure 3, the blade mounting device 100 is arranged between the front 307 of the hub 300 and the front of the frame 405 of the wind turbine 10.

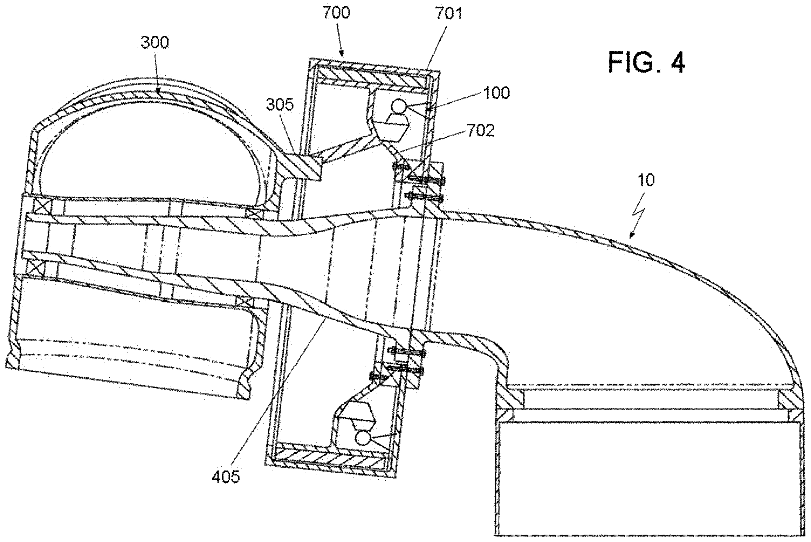

In the example shown in figure 4, the blade mounting device 100 is arranged integrated in the generator 700 of the wind turbine 10. In this specific example, the blade mounting device 100 is arranged between the generator stator 701 and the generator rotor 702 as shown in figure 4.

One or a plurality of the above described blade mounting devices 100 may be provided in the wind turbine 10 for rotating the hub 300, as required, in order to mount the blades for assembling the rotor. Figure 1a shows one example of this arrangement where a number of blade mounting devices 100 are mounted on the wind turbine 10 to rotate the hub 300 for assembling the rotor. In this example, each blade mounting device 100 comprises driving means 200 comprising multi-stage type gearing. Each multi-stage type gearing consists of the above mentioned threaded shaft 500 and gearwheel 510 as well as an additional pinion gear 515 arranged between them.

The blade mounting devices 100 according to this example may vary in number. All or some of the blade mounting devices 100 in this example may be left in the wind turbine 10 once the rotor is assembled. In particular, this option may offer certain advantages as the remaining mounting devices 100 may be capable of rotating the rotor (that is the hub 300 with the blades already mounted therein) in cases when the generator does not work and positioning is required to perform, for instance, maintenance operations.

Once the blade mounting device 100 or the plurality of blade mounting devices 100 has been mounted in the wind turbine 10 in any of the positions set out above and shown in figures 2-4, a blade is hoisted from the ground to the hub 300 and held in a horizontal position and aligned with a blade receiving portion of the hub 300. Then a blade mounting device 100 is actuated for rotating the hub 300 until a position suitable for mounting the blade has been reached. After the blade has been mounted to the hub 300, the blade mounting device 100 is actuated again for further rotating the hub 300 to a different angular position suitable for mounting an additional blade, which has been hoisted, to the hub 300. The additional blade is mounted to the hub 300 and the process is repeated until the complete set of blades has been mounted to the hub 300. Finally, the blade mounting device 100 is removed from the wind turbine 10 or left in place if the blade mounting device 100 is provided with means for disengaging the threaded shaft 500 from the gearwheel 510.

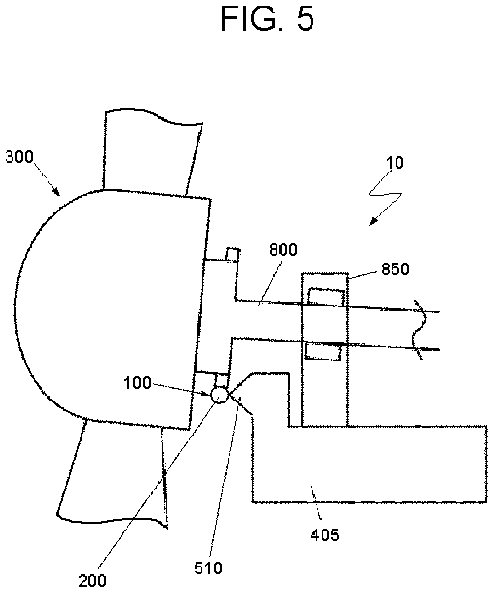

Although only a number of examples have been disclosed herein, other alternatives, modifications, uses and/or equivalents thereof are possible. For example, although the disclosed examples refer to an arrangement where the hub 300 is supported on a front frame, the present blade mounting device 100 could be also applicable in other different configurations. In particular, the present blade mounting device 100 can be applied to a somewhat more standard configuration where the rotor (hub 300 and blades) is not supported by a front frame but attached to a main shaft 800 which is supported by a main bearing 850 arranged on the frame. In this case, the rotor is suspended and the driving element (threaded shaft 500) is mounted in the rear of the hub 300, whereas the driven element (gearwheel 510) is mounted on front of the frame 405 of the wind turbine 10 as shown in figure 5.

Furthermore, all possible combinations of the described examples are also covered. Thus, the scope of the present disclosure should not be limited by particular examples, but should be determined only by a fair reading of the claims that follow.

## Claims

1. A device (100) for rotating a hub (300) for mounting blades in a hub (300) of a direct-drive wind turbine (10), the device (100) comprising driving means (200) to rotate the hub (300) relative to a stationary part (400) of the wind turbine (10) for arranging the hub (300) in a position suitable for mounting the blade, **characterised in that** the driving means (200) includes a driving element that comprises a threaded shaft (500) associated with one of the hub (300) and the stationary part (400) and a driven element that comprises a gearwheel (510) meshing with the threaded shaft (500) and associated with the other of the hub (300) and the stationary part (400) such that it is rotated by the driving element (500), and with the driving element (500) and the driven element (510) being arranged such that their corresponding axes of rotation (X, Y) are at least substantially perpendicular to each other.

2. The device (100) of claim 1, wherein it further comprises a pinion gear (515) between the threaded shaft (500) and the gearwheel (510) meshing therewith.

3. The device (100) of any of the preceding claims, wherein it further comprises actuating means (600) for driving the driving element (500).

4. The device (100) of claim 3, wherein the actuating means (600) comprises an electric or hydraulic motor.

5. The device (100) of claim 3 or 4, wherein the actuating means (600) are adapted to continuously rotate the hub (300) so that the hub (300) can be positioned in different angular positions suitable for mounting the blade in a horizontal position in the hub (300).

6. The device (100) of any of the preceding claims, wherein the device (100) is arranged between the hub (300) and the frame (405) of the wind turbine (10).

7. The device (100) of any of the preceding claims, wherein the device (100) is arranged integrated in the generator (700).

8. The device (100) of any of the preceding claims, wherein it comprises means for disengaging the driving element (500) from the driven element (510).

9. A method for rotating a hub (300) for mounting blades in a hub (300) of a direct-drive wind turbine (10), the method comprising installing the blade mounting device (100) of any of the preceding claims in the wind turbine (10), hoisting a blade to the hub (300), actuating the blade mounting device (100) for rotating the hub (10) until a position suitable for mounting the blade to the hub (300) has been reached, and mounting the blade to the hub (300).

10. The method of claim 9, wherein the hub (300) is rotated by the blade mounting device (100) until the hub (300) is positioned such that the blade can be mounted to the hub (300) in a horizontal position.

11. The method of claim 9 or 10, wherein it further comprises actuating the blade mounting device (100) for further rotating the hub (300) into a different angular position suitable for mounting an additional blade to the hub (300), hoisting the additional blade and mounting it to the hub (300).

12. The method of any of the claims 9-11, wherein it further comprises removing the blade mounting device (100) from the wind turbine (10).

13. The method of any of the claims 9-12, wherein installing the blade mounting device (100) consists in installing it between the hub (300) and the frame (405) of the wind turbine (10).

14. The method of any of the claims 9-12, wherein installing the blade mounting device (100) consists in installing it integrated in the wind turbine generator (700).

## Patentansprüche

1. Eine Vorrichtung (100) zur Drehung von einer Nabe (300) zur Montage von Blättern an einer Nabe (300) von einer Windturbine mit Direktantrieb (10), wobei die Vorrichtung (100) ein Antriebsmittel (200) zur Drehung der Nabe (300) bezüglich eines fest montierten Teils (400) der Windturbine (10) zur Anordnung der Nabe (300) in einer zur Montage des Blattes geeigneten Position umfasst, **dadurch gekennzeichnet, dass** das Antriebsmittel (200) ein Antriebselement umfasst, das eine mit einem von der Nabe (300) und dem fest montierten Teil (400) verknüpfte Gewindewelle (500) umfasst und ein angetriebenes Element umfassend ein Zahnrad (510) umfasst, das in die Gewindewelle (500) eingreift und mit dem anderen von der Nabe (300) und dem fest montierten Teil (400) verknüpft ist, so dass es durch das Antriebselement (500) gedreht wird, und wobei das Antriebselement (500) und das angetriebene Element (510) derart angeordnet sind, dass deren jeweiligen Drehachsen (X, Y) mindestens im Wesentlichen senkrecht zu einander sind.

2. Die Vorrichtung (100) des Anspruchs 1, wobei sie weiterhin ein Ritzel (515) zwischen der Gewindewelle (500) und dem in Eingriff damit stehenden Zahnrad (510) umfasst.

3. Die Vorrichtung (100) von einem der vorhergehenden Ansprüche, wobei sie weiterhin ein Betätigungsmittel (600) zum Antrieb des Antriebselements (500) umfasst.

4. Die Vorrichtung (100) des Anspruchs 3, wobei das Betätigungsmittel (600) einen elektrischen oder hydraulischen Motor umfasst.

5. Die Vorrichtung (100) des Anspruchs 3 oder 4, wobei das Betätigungsmittel (600) angepasst ist, um die Nabe (300) kontinuierlich zu drehen, so dass die Nabe (300) in verschiedene zur Montage des Blattes in einer horizontalen Position an der Nabe (300) geeignete Winkelpositionen gebracht werden kann.

6. Die Vorrichtung (100) von einem der vorhergehenden Ansprüche, wobei die Vorrichtung (100) zwischen der Nabe (300) und dem Rahmen (405) der Windturbine (10) angeordnet ist.

7. Die Vorrichtung (100) von einem der vorhergehenden Ansprüche, wobei die Vorrichtung (100) integriert im Generator (700) angeordnet ist.

8. Die Vorrichtung (100) von einem der vorhergehenden Ansprüche, wobei sie ein Mittel umfasst, um das Antriebselement (500) bezüglich des angetriebenen Elements (510) außer Eingriff zu bringen.

9. Ein Verfahren zur Drehung von einer Nabe (300) zur Montage von Blättern an einer Nabe (300) von einer Windturbine mit Direktantrieb (10), wobei das Verfahren folgendes umfasst: einbauen der Vorrichtung zur Blättermontage (100) von einem der vorhergehenden Ansprüche in der Windturbine (10), heben von einem Blatt auf die Nabe (300), betätigen der Vorrichtung zur Blättermontage (100), um die Nabe (10) zu drehen, bis eine Position erreicht worden, die geeignet zur Montage des Blattes an die Nabe (300) ist, und montieren des Blattes an der Nabe (300).

10. Das Verfahren des Anspruchs 9, wobei die Nabe (300) mittels der Vorrichtung zur Blättermontage (100) gedreht wird, bis die Nabe (300) so angeordnet ist, dass das Blatt an der Nabe (300) in einer horizontalen Position montiert werden kann.

11. Das Verfahren des Anspruchs 9 oder 10, wobei es weiterhin das Betätigen der Vorrichtung zur Blättermontage (100) umfasst, um die Nabe (300) ferner in eine verschiedene Winkelposition zu drehen, die geeignet ist, um ein zusätzliches Blatt an der Nabe (300) zu montieren, das Heben des zusätzlichen Blattes und das Montieren dessen an der Nabe (300) umfasst

12. Das Verfahren von einem der Ansprüche 9-11, wobei es weiterhin das Entfernen der Vorrichtung zur Blättermontage (100) aus der Windturbine (10) umfasst.

13. Das Verfahren von einem der Ansprüche 9-12, wobei das Einbauen der Vorrichtung zur Blättermontage (100) darin besteht, dass sie zwischen der Nabe (300) und dem Rahmen (405) der Windturbine (10) montiert wird.

14. Das Verfahren von einem der Ansprüche 9-12, wobei das Einbauen der Vorrichtung zur Blättermontage (100) darin besteht, dass sie integriert in dem Windturbinengenerator (700) montiert wird.

## Revendications

1. Un dispositif (100) pour faire pivoter un moyeu (300) pour monter des pales sur un moyeu (300) d'une éolienne à entraînement direct (10), le dispositif (100) comprenant un moyen d'entraînement (200) pour faire pivoter le moyeu (300) par rapport à une partie stationnaire (400) de l'éolienne (10) afin de disposer le moyeu (300) dans une position appropriée pour monter la pale, **caractérisé en ce que** le moyen d'entraînement (200) inclut un élément d'entraînement qui comprend un arbre fileté (500) lié à l'un parmi le moyeu (300) et la partie stationnaire (400) et un élément entraîné qui comprend une roue d'engrenage (510) intervenant dans l'arbre fileté (500) et qui est associé avec l'autre parmi le moyeu (300) et la partie stationnaire (400) de façon qu'il est pivoté par l'élément d'entraînement (500), et avec l'élément d'entraînement (500) et l'élément entraîné (510) étant disposés de façon que leurs axes de rotation (X, Y) correspondants sont au moins essentiellement perpendiculaires l'un à l'autre.

2. Le dispositif (100) de la revendication 1, comprenant en outre un pignon (515) situé entre l'arbre fileté (500) et la roue d'engrenage (510) intervenant avec celui-ci.

3. Le dispositif (100) de l'une quelconque des revendications précédentes, comprenant en outre un moyen d'actionnement (600) pour entraîner l'élément d'entraînement (500).

4. Le dispositif (100) de la revendication 3, dans lequel le moyen d'actionnement (600) comprend un moteur électrique ou hydraulique.

5. Le dispositif (100) de la revendication 3 ou 4, dans lequel le moyen d'actionnement (600) est adapté pour faire pivoter de manière continue le moyeu (300) de façon que le moyeu (300) peut être situé dans des positions angulaires différentes appropriées pour monter la pale dans une position horizontale sur le moyeu (300).

6. Le dispositif (100) de l'une quelconque des revendications précédentes, dans lequel le dispositif (100) est disposé entre le moyeu (300) et le châssis (405) de l'éolienne (10).

7. Le dispositif (100) de l'une quelconque des revendications précédentes, dans lequel le dispositif (100) est disposé intégré dans le générateur (700).

8. Le dispositif (100) de l'une quelconque des revendications précédentes, comprenant en outre un moyen pour désengrener l'élément d'entraînement (500) de l'élément entraîné (510).

9. Un procédé pour faire pivoter un moyeu (300) pour monter des pales sur un moyeu (300) d'une éolienne à entraînement direct (10), le procédé comprenant installer le dispositif de montage de pales (100) de l'une quelconque des revendications précédentes dans l'éolienne (10), soulever une pale jusqu'au moyeu (300), actionner le dispositif de montage de pales (100) pour faire pivoter le moyeu (10) jusqu'à ce qu'une position appropriée pour le montage de la pale sur le moyeu (300) ait été atteinte, et monter la pale sur le moyeu (300).

10. Le procédé de la revendication 9, dans lequel le moyeu (300) est pivoté par le dispositif de montage de pales (100) jusqu'à ce que le moyeu (300) soit situé de manière que la pale peut être montée sur le moyeu (300) dans une position horizontale.

11. Le procédé de la revendication 9 ou 10, comprenant en outre actionner le dispositif de montage de pales (100) afin de faire pivoter en outre le moyeu (300) jusqu'à une position angulaire différente appropriée pour le montage d'une autre pale sur le moyeu (300), soulever l'autre pale et la monter sur le moyeu (300).

12. Le procédé de l'une quelconque des revendications 9-11, comprenant en outre enlever le dispositif de montage de pales (100) de l'éolienne (10).

13. Le procédé de l'une quelconque des revendications 9-12, dans lequel installer le dispositif de montage de pales (100) consiste en l'installer entre le moyeu (300) et le châssis (405) de l'éolienne (10).

14. Le procédé de l'une quelconque des revendications 9-12, dans lequel installer le dispositif de montage de pales (100) consiste en l'installer intégré dans le générateur d'éolienne (700).
